(19) Europäisches Patentamt
European Patent Office
Office européen des brevets

(11) **EP 2 245 482 B1**

(12) **EUROPÄISCHE PATENTSCHRIFT**

(45) Veröffentlichungstag und Bekanntmachung des Hinweises auf die Patenterteilung:
**26.12.2018  Patentblatt 2018/52**

(21) Anmeldenummer: **09712979.5**

(22) Anmeldetag: **10.02.2009**

(51) Int Cl.:
**G01S 17/32** (2006.01)    **G01S 7/499** (2006.01)
**G01S 7/481** (2006.01)    **G01B 9/02** (2006.01)

(86) Internationale Anmeldenummer:
**PCT/CH2009/000055**

(87) Internationale Veröffentlichungsnummer:
**WO 2009/103172 (27.08.2009 Gazette 2009/35)**

(54) **ELEKTROOPTISCHER DISTANZMESSER**

ELECTRO-OPTICAL DISTANCE-MEASURING UNIT

DISPOSITIF DE MESURE DE DISTANCE ÉLECTRO-OPTIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **19.02.2008  CH 230082008**

(43) Veröffentlichungstag der Anmeldung:
**03.11.2010  Patentblatt 2010/44**

(73) Patentinhaber: **Leica Geosystems AG
9435 Heerbrugg (CH)**

(72) Erfinder:
• **LUETHI, Thomas
CH-5000 Aarau (CH)**
• **MEIER, Dietrich
CH-5015 Niedererlinsbach (CH)**

(74) Vertreter: **Kaminski Harmann
Patentanwälte AG
Landstrasse 124
9490 Vaduz (LI)**

(56) Entgegenhaltungen:
**EP-A- 1 647 838      EP-A- 1 744 119
WO-A-97/18486      WO-A-02/084327
DE-C1- 19 542 490**

## Beschreibung

Die Erfindung bezieht sich auf das Gebiet der elektrooptischen Distanzmessung, insbesondere auf einen auf einen elektrooptischen Distanzmesser gemäss dem Oberbegriff des Patentanspruches 1.

## STAND DER TECHNIK

Eine derartige elektrooptische Distanzmessung ist beispielsweise aus EP-A-1 647 838 bekannt. Für die Erklärung der Funktionsweise des Fizeau-Verfahrens zur Absolutdistanzmessung wird auf dieses Dokument verwiesen. Für die vorliegende Erfindung ist von Bedeutung, dass bei diesem Verfahren ausgehendes und zurückkehrendes Messlicht in einem Modulator moduliert wird. Das Messlicht wird durch einen Laser, insbesondere einen Diodenlaser, erzeugt. Unter Variation der Frequenz der genannten Modulation wird ein Minimum der Intensität eines detektierten Messlichtstrahles bestimmt (oder, im Wesentlichen gleichbedeutend, ein Nulldurchgang der Ableitung der Intensität). Aus der Minimumsfrequenz wird die Länge einer Messstrecke zwischen dem Messgerät und einem Retroreflektor bestimmt. Es zeigt sich, dass eine zusätzliche Polarisation durch optische Elemente im Messlichtstrahl die Lage dieses Minimums als Fehler zweiter Ordnung verschiebt. Dadurch wird die Messung gestört, und es müssen Kompensationsmassnahmen getroffen werden. Die Störung der Polarisation kann beispielsweise durch zusätzliche Strahlumlenkspiegel im Messstrahl oder dem Retroreflektor hervorgerufen werden.

WO 97/18486 zeigt eine elektro-optische Absolutdistanzmessung nach dem Fizeau-Verfahren. Dabei wird ein Laserstrahl erzeugt, und durch eine Fokussierungsoptik und einen optischen Isolator auf einen polarisierenden Strahlteiler zur linearen Polarisierung des Laserlichtes geführt, und anschliessend durch einen elektrooptischen Modulator, einen weiteren elektro-optischen Kristall zur Elimination des Einflusses einer externen Zusatzpolarisation, und einen lambda/4-Retarder und eine Austrittsoptik auf eine Messstrecke geführt. Entlang der Messstrecke zurückkehrendes Licht gelangt durch die genannten Elemente bis zum polarisierenden Strahlteiler und wird von diesem auf einen Detektor geführt. Eine Auswerteeinheit dient zur Bestimmung der Länge der Messstrecke anhand des Detektorsignals.

EP 1 744 119 beschreibt eine Vorrichtung zur optischen Kohärenztomographie. Darin wird Licht verwendet, das einen optischen Frequenzbereich überstreicht. Das Licht wird durch eine breitbandige Quelle erzeugt, beispielsweise eine "edgeemitting LED (ELED)" oder eine superlumineszente Diode (SLD) oder eine "fiber fluorescent source (EDFFS)". Das Licht aus der Quelle wird durch beispielsweise ein Fabry-Perot Filter oder ein acousto-optisches Filter gefiltert, so dass es mit einer ausgewählten Frequenzlinie einen vorgegebenen Frequenzbereich überstreicht. Das übrige Licht der Breitbandquelle wird also herausgefiltert.

## DARSTELLUNG DER ERFINDUNG

Es ist deshalb Aufgabe der Erfindung, eine elektrooptische Distanzmessung der eingangs genannten Art zu schaffen, welche die oben genannten Nachteile behebt.

Diese Aufgabe löst eine elektrooptische Distanzmessung mit den Merkmalen des Patentanspruches 1.

Ein entsprechender elektrooptischer Distanzmesser weist also eine Lichtquelle auf, deren abgestrahltes Licht im Distanzmesser mindestens durch einen polarisierenden Strahlteiler, einen elektrooptischen Modulator und einen lambda/4-Retarder (zur Temperaturkompensation des Modulatorbrechungskoeffizienten) auf eine Messstrecke geführt wird. Entlang der Messstrecke zurückkehrendes, also reflektiertes Licht wird mindestens durch den Retarder, den elektrooptischen Modulator und den polarisierenden Strahlteiler auf einen Detektor geführt. Ferner weist der Distanzmesser eine Auswerteeinheit zur Bestimmung einer Länge der Messstrecke nach Massgabe einer Modulationsfrequenz des elektrooptischen Modulators und eines Signals des Detektors auf. Die Lichtquelle weist ein breites Spektrum des abgestrahlten Lichtes auf. Vorzugsweise ist die Lichtquelle eine superlumineszente Diode (SLD oder SLED). Ein weiterer Vorteil bei der Verwendung einer superlumineszenten Diode anstelle einer Laserquelle ist, dass kein optischer Isolator vor der Lichtquelle erforderlich ist, welcher verhindern soll, dass rückkehrendes Licht in den Laser eindringt und zur Emission anregt. Ein optischer Isolator ist ein optisches Bauteil, das Lichtwellen einer bestimmten Polarisationsrichtung nur in einer (Durchlass-) Richtung durchlässt, in der Gegenrichtung (Sperr-Richtung) jedoch Licht beliebiger Polarisation absorbiert.

Die Erfindung steht mit der Verwendung einer breitbandigen Quelle im Gegensatz zu üblichen Konstruktionen zur elektrooptischen Distanzmessung, bei welchen gezielt schmalbandige (Laser)-Lichtquellen mit genau kontrollierter Wellenlänge verwendet werden, um hohe Messgenauigkeiten zu erzielen. Es zeigt sich überraschenderweise, wie weiter unten ausgeführt wird, dass Abweichungen, die sich durch das breitbandige Messlicht ergeben, gegenseitig kompensieren.

Der elektrooptische Modulator moduliert vorzugsweise die Polarisation des Lichtes. Im Prinzip kann auch ein Modulator verwendet werden, welcher - wie im ursprünglichen Fizeau-Verfahren - die Amplitude moduliert; dies ist aber in der Praxis anfälliger auf Störungen.

Das Detektorsignal entspricht vorzugsweise der Intensität des zurückgekehrten und durch den Modulator rückmodulierten Signals. Die Modulationsfrequenz des elektrooptischen Modulators liegt im Hochfrequenzbereich, d.h. beispielsweise in einem Bereich von 2 GHz bis 2.5 GHz.

Es zeigt sich überraschenderweise, dass bei einer breitbandigen Lichtquelle die Frequenzlage eines Minimums eines Detektorsignals bei variierender Modulationsfrequenz nicht mehr durch Störungen der Polarisation des Messlichtes beeinflusst wird (zumindest nicht in wesentlichem Masse). Dadurch werden Kompensationseinrichtungen, welche beim Betrieb der Distanzmesser mit einer Laserdiode, wie bisher üblich, erforderlich sind, nicht mehr benötigt. Der Aufbau des Distanzmessers wird vereinfacht.

Die minimale Bandbreite der Lichtquelle ist vorzugsweise durch die folgende Beziehung zu Modulatorparametern bestimmt:

$$\left| \frac{d\{[n_o(\lambda) - n_e(\lambda)]l_{Kristall} / \lambda\}}{d\lambda} \Delta\lambda \right| \geq 1$$

Dabei sind $n_o$ der ordentliche und $n_e$ der ausserordentliche wellenlängenabhängige Brechungsindex des doppelbrechenden Modulatormaterials, $l_{Kristall}$ die Länge des Kristalls, $\lambda$ die Wellenlänge und $\Delta\lambda$ die Bandbreite. Aus dieser Bedingung ergibt sich also ein minimaler Wert für $\Delta\lambda$.

Die Frequenz der Lichtquelle kann im wesentlichen beliebig gewählt sein, so dass verschiedene Typen von superlumineszenten Diode verwendbar sind (z.B. mit 650, 750, 795, 800, 830, 840, 850, 1270, 1300, 1400, 1480 oder 1550 nm Wellenlänge).

Frequenz und Bandbreite des Lichtes können in einer bevorzugten Ausführungsform der Erfindung durch ein optisches Bandpassfilter, welches im Strahlengang angeordnet ist, stabilisiert werden. In diesem Fall ist die Bandbreite des Filters vorzugsweise mindestens etwas grösser als die wie oben bestimmte minimale erforderlich Bandbreite der Quelle, beispielsweise mindestens 20% grösser.

Weitere bevorzugte Ausführungsformen gehen aus den abhängigen Patentansprüchen hervor.

## KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:

Figur 1     eine Struktur eines Fizeau-Distanzmessers;

Figur 2     charakteristische Verläufe der Abhängigkeit zwischen Modulationsfrequenz und Detektorsignal gemäss dem Stand der Technik; und

Figur 3     charakteristische Verläufe der Abhängigkeit zwischen Modulationsfrequenz und Detektorsignal gemäss der Erfindung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

## WEGE ZUR AUSFÜHRUNG DER ERFINDUNG

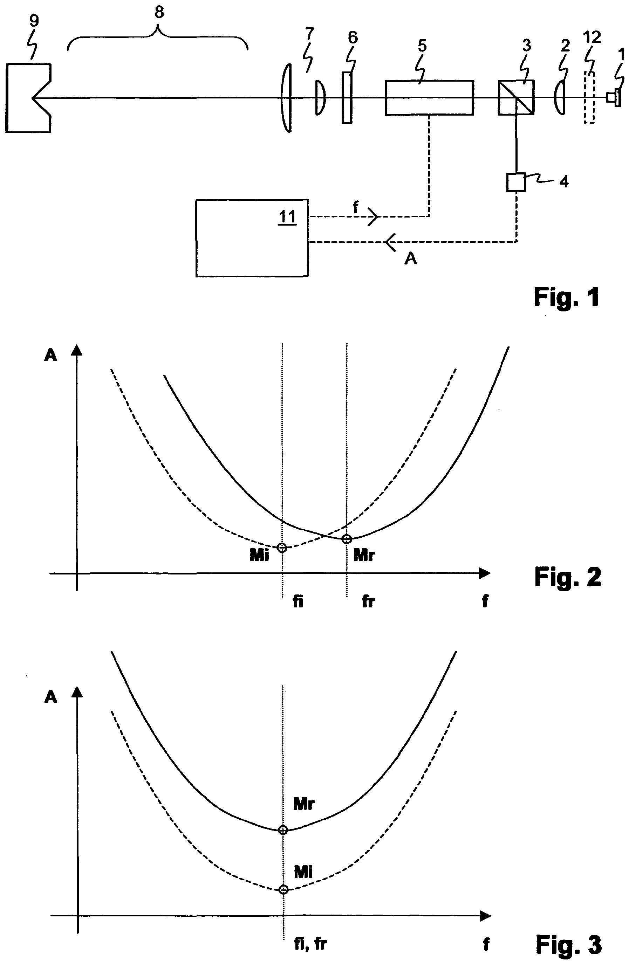

**Figur 1** zeigt eine Struktur eines Fizeau-Distanzmessers zur Absolutdistanzmessung: Eine Lichtquelle 1 strahlt Messlicht ab, welches durch einen Kollimator 2, einen polarisierenden Strahlteiler 3, einen elektrooptischen Modulator 5, einen Retarder oder Retarderplatte 6 und einen Strahlaufweiter 7 auf eine Messstrecke 8 geführt wird. Die Messstrecke 8 ist typischerweise einige Meter bis mehrere hundert Meter, ggf. auch einige Kilometer lang. Am Ende der Messstrecke 8 reflektiert ein Reflektor, typischerweise ein Würfelecken-Retroreflektor oder Tripelreflektor 9, das Messlicht. Dieses gelangt als zurückkehrendes Messlicht durch den Strahlaufweiter 7, die Retarderplatte 6, den elektrooptischen Modulator 5 und den polarisierenden Strahlteiler 3 auf einen Detektor 4. Der elektrooptische Modulator 5 moduliert vorzugsweise die Polarisation des ausgehenden wie auch des zurückkehrenden Messlichtes. Dazu weist er eine Einrichtung zur Ansteuerung des Modulators 5 mit einer hochfrequenten Modulationsfrequenz auf. Die Retarderplatte 6 ist eine lambda/4-Platte und erzeugt somit aus linear polarisiertem Licht zirkulär polarisiertes Licht, und nach zweimaligem Durchgang wieder linear polarisiertes Licht, aber mit um 90° gedrehter Polarisationsrichtung, also mit vertauschten Achsen der Modulation im Modulationskristall. Der Detektor 4 misst die Intensität des zurückkehrenden Lichtes. Eine Auswerteeinheit 11 verarbeitet ein Ausgangssignal dieses Detektors 4, steuert die Modulationsfrequenz des elektrooptischen Modulators 5 zur iterativen Bestimmung eines Minimums des Detektorsignals und führt die Distanzbestimmung nach dem Fizeau-Verfahren durch. Weitere allgemein bekannte Elemente eines solchen Distanzmessers wie Filter, Polarisatoren, Spiegel etc. können vorliegen, sind aber der Übersichtlichkeit wegen nicht eingezeichnet.

Zur Funktionsweise der Absolutdistanzmessung nach dem Fizeau-Verfahrens wird auf die eingangs zitierte EP-A-1 647 838 verwiesen.

In einer bevorzugten Ausführungsform der Erfindung liegt zudem ein optisches Bandpassfilter 12 vor. Dieses ist in der Figur 1 strichliert gezeichnet, beispielhaft unmittelbar vor dem Lichtquelle 1. Das Bandpassfilter 12 kann aber auch an einer beliebigen anderen Stelle im Strahlengang zwischen Lichtquelle 1 und Detektor 4 angeordnet sein. Das Bandpassfilter 12 begrenzt das Spektrum des durchgehenden Lichtes nach Massgabe des im optischen Modulator 5 verwendeten Modulationsmateriales und stabilisiert insbesondere die Wellenlänge des durchgelassenen Lichtes.

**Figur 2** zeigt charakteristische Verläufe der Abhängigkeit zwischen Modulationsfrequenz f und der Amplitude A des Detektorsignals gemäss dem Stand der Technik. Die Figur zeigt eines der Minima des Verlaufes von A über f. Die gestrichelte Linie zeigt den idealen Verlauf ohne Störungen der Polarisation, die ausgezogene Linie zeigt den Verlauf mit Störungen der Polarisation. Die Störungen der Polarisation liegen darin, dass in mindestens einer Komponente des Distanzmessers 10 oder des Retroreflektors 9 das Licht, abhängig von seiner Wellenlänge und/oder der Orientierung seiner Polarisation beim Durchtritt durch die Komponente, zusätzlich polarisiert, d.h. in der Polarisation verändert wird ("excess polarisation").

Die Polarisationsmodulation kann als Modulation der Phase von zwei senkrecht aufeiner stehenden Licht-vektorkomponenten angesehen werden. So kann die Phase zwischen den Polarisationsrichtungen zusätzlich so verschoben werden, so dass beispielsweise linear polarisiertes Licht zirkular polarisiert wird. Solche störenden Komponenten sind insbesondere nicht eingezeichnete Ablenkspiegel und der Retroreflektor 9. Beim elektrooptischen Modulator 5 bewirken solche Störungen eine Verschiebung der Minimumsfrequenz, insbesondere dann, wenn der elektrooptische Modulator 5 nicht optimal abgestimmt ist (in Resonanz betriebener "nicht flacher" Modulator), d.h. wenn seine elektrische Anregungsfrequenz und seine Resonanzfrequenz nicht übereinstimmen. Beim Retroreflektor, der normalerweise als Tripel-Spiegel (Würfeleckenspiegel) ausgeführt ist 9 ändert sich der Einfluss auf die Polarisation dadurch, dass der Retroreflektor 9 bezüglich des Messtrahls 8 verdreht und gekippt wird. In der Folge, was die Messung durch den Detektor 4 betrifft, bewirkt dies eine Verschiebung des Minimums von einem idealen Minimum Mi (bei einer Frequenz fi) zu einem gestörten Minimum Mr. Dem gestörten Minimum Mr entspricht eine andere Frequenz fr und damit auch eine andere, verfälschte, gemessene Distanz zum Retroreflektor 9.

**Figur 3** zeigt charakteristische Verläufe der Abhängigkeit zwischen Modulationsfrequenz und Detektorsignal gemäss der Erfindung. Die gestrichelte Linie zeigt den idealen Verlauf ohne Störungen der Polarisation, die ausgezogene Linie zeigt den Verlauf mit Störungen der Polarisation. Es zeigt sich, dass, bei schmaler Bandbreite der Lichtquelle 1, die Amplitude des Gleichsignalanteils (DC-Anteil) abhängig ist von der Modulationsfrequenz und der Temperatur des Modulationskristalles. Bei der breitbandigen Quelle steigen aber die DC-Anteile über die Wellenlängen gemittelt an und somit bleibt die Frequenz, bei welcher das Minimum Mr auftritt, unverändert! Dieser vorteilhafte Effekt erlaubt es, auf messtechnische Kompensationsmassnahmen zur Korrektur des gestörten Minimums zu verzichten.

Die Lichtquelle 1 ist vorzugsweise eine superlumineszente Diode, oder eine andere Lichtquelle, welche eine bestimmte Bandbreite des abgestrahlten Lichtes aufweist. Die Bandbreite sollte, bei Verwendung von LiTaO3 als Modulationsmaterial im elektrooptischen Modulator 5, mindestens zehn Nanometer, vorzugsweise mindestens fünfzehn Nanometer betragen. Eine Bandbreite von 30 bis 40 Nanometern gibt gute Ergebnisse. Bei Verwendung von LiNbO3 als Modulationsmaterial sollte die Bandbreite mindestens fünf bis zehn Nanometer betragen, damit der beschriebene vorteilhafte Effekt auftritt. Diese Bandbreiten gelten vorzugsweise für eine Lichtwellenlänge von 795 Nanometern. Liegt das optionale Bandpassfilter 12 vor, so begrenzt dieses das durchgehende Licht höchstens auf eine solche Bandbreite entsprechend dem verwendeten Modulationsmaterial. Die Filterbandbreite ist also mindestens so breit, besser etwas breiter als die geforderte Bandbreite der Lichtquelle (da hier in der Regel ein Filter die Bandbreite schärfer begrenzt als eine Quelle).

Die Lichtquelle 1 weist vorzugsweise eine kleine Leuchtfläche und eine hohe Intensität des abgestrahlten Lichtes auf. Die Leuchtfläche der Lichtquelle 1 beträgt dazu vorzugsweise weniger als 10 Quadratmikrometer, insbesondere weniger als 4 Quadratmikrometer. Die Intensität des abgestrahlten Lichtes ist in der Regel begrenzt durch Vorschriften betreffend die Augensicherheit, unter Berücksichtigung von Transmissionsverlusten im Strahlengang und von Temperatureinflüssen. Die Intensität respektive die von der Lichtquelle in Form von Licht abgegebene Leistung beträgt dadurch typischerweise drei bis fünf Milliwatt.

### BEZUGSZEICHENLISTE

| | | | |
|---|---|---|---|
| 1 | Lichtquelle | 8 | Messstrecke |
| 2 | Kollimator | 9 | Retroreflektor |
| 3 | polarisierender Strahlteiler | 10 | Distanzmesser |
| 4 | Detektor | 11 | Steuer- und Auswerteeinheit |

(fortgesetzt)

| 5 | elektrooptischer Modulator | 12 | Bandpassfilter |
|---|---|---|---|
| 6 | lambda/4-Retarder | Mi | ideales Minimum |
| 7 | Strahlaufweiter | Mr | reales Minimum |

**Patentansprüche**

1. Elektrooptischer Distanzmesser (10), aufweisend einen polarisierenden Strahlteiler (3), einen elektrooptischen Modulator (5), einen lambda/4-Retarder (6) und eine Lichtquelle (1), deren abgestrahltes Licht im Distanzmesser (10) mindestens durch den polarisierenden Strahlteiler (3), den elektrooptischen Modulator (5) und den lambda/4-Retarder (6) auf eine Messstrecke (8) geführt wird, und entlang der Messstrecke (8) zurückkehrendes Licht mindestens durch den Retarder (6), den elektrooptischen Modulator (5) und den polarisierenden Strahlteiler (3) auf einen Detektor (4) geführt wird, und ferner aufweisend eine Auswerteeinheit (11) zur Bestimmung einer Länge der Messstrecke (8) nach Massgabe einer Modulationsfrequenz des elektrooptischen Modulators (5) und eines Signals des Detektors (4),
**dadurch gekennzeichnet, dass** eine Bandbreite $\Delta\lambda$ der Lichtquelle (1) die folgende Bedingung erfüllt

$$\left| \frac{d\{[n_o(\lambda) - n_e(\lambda)]l_{Kristall} / \lambda\}}{d\lambda} \Delta\lambda \right| \geq 1$$

wobei $n_o$ der ordentliche und $n_e$ der ausserordentliche wellenlängenabhängige Brechungsindex des Modulatormaterials sind, $l_{Kristall}$ die Länge des Modulatorkristalls des Modulators (5) und $\lambda$ die Wellenlänge der Lichtquelle (1).

2. Distanzmesser (10) gemäss Anspruch 1, wobei die Auswerteeinheit (11) zur Messung der Länge der Messstrecke (8) nach dem Fizeau-Verfahren eingerichtet ist.

3. Distanzmesser (10) gemäss Anspruch 1 oder 2, wobei der elektrooptische Modulator (5) zur Modulation der Polarisation des durchgehenden Lichtes vorgesehen ist.

4. Distanzmesser (10) gemäss einem der bisherigen Ansprüche, wobei die Leuchtfläche der Lichtquelle (1) weniger als 10 Quadratmikrometer, vorzugsweise weniger als 4 Quadratmikrometer beträgt.

5. Distanzmesser (10) gemäss einem der bisherigen Ansprüche, wobei die Intensität des von der Lichtquelle (1) abgestrahlten Lichtes zwischen drei und fünf Milliwatt beträgt.

6. Distanzmesser (10) gemäss einem der bisherigen Ansprüche, wobei das Modulationsmaterial LiTaO3 ist und das Spektrum des abgestrahlten Lichtes eine Bandbreite von mindestens 10 Nanometern, vorzugsweise mindestens 15 Nanometern aufweist.

7. Distanzmesser (10) gemäss einem der bisherigen Ansprüche, wobei das Modulationsmaterial LiNbO3 ist und das Spektrum des abgestrahlten Lichtes eine Bandbreite von mindestens 5 Nanometern, vorzugsweise mindestens 8 Nanometern aufweist.

8. Distanzmesser (10) gemäss einem der bisherigen Ansprüche, wobei die Lichtquelle (1) eine superlumineszente Diode ist.

9. Distanzmesser (10) gemäss einem der bisherigen Ansprüche, wobei kein optischer Isolator im Strahlengang vor der Lichtquelle (1) angeordnet ist.

10. Distanzmesser (10) gemäss einem der bisherigen Ansprüche, wobei ein optisches Bandpass-Filter (12) zur Stabilisierung der Frequenz und der Bandbreite im Strahlengang angeordnet ist.

## Claims

1. An electro-optical distance-measuring unit (10), comprising a polarizing beam splitter (3), an electro-optical modulator (5), a lambda/4 retarder (6), and a light source (1), the emitted light of which in the distance-measuring unit (10) is guided onto a measurement path (8) at least by the polarizing beam splitter (3), the electro-optical modulator (5) and the lambda/4 retarder (6), and light returning along the measurement path (8) is guided onto a detector (4) at least by the retarder (6), the electro-optical modulator (5) and the polarizing beam splitter (3), and furthermore comprising an evaluation unit (11) for determining a length of the measurement path (8) in accordance with a modulation frequency of the electro-optical modulator (5) and a signal of the detector (4), **characterized in that** a bandwidth $\Delta\lambda$ of the light source (1) satisfies the following condition

$$\left| \frac{d\{[n_o(\lambda) - n_e(\lambda)]l_{Kristall}/\lambda\}}{d\lambda} \Delta\lambda \right| \geq 1$$

where $n_o$ is the ordinary and $n_e$ the extraordinary wavelength-dependent refractive index of the modulator material, $l_{Kristall}$ is the length of the modulator crystal of the modulator (5) and $\lambda$ is the wavelength of the light source (1).

2. The distance-measuring unit (10) as claimed in claim 1, wherein the evaluation unit (11) is designed for measuring the length of the measurement path (8) according to the Fizeau method.

3. The distance-measuring unit (10) as claimed in claim 1 or 2, wherein the electro-optical modulator (5) is provided for modulating the polarization of the light passing through.

4. The distance-measuring unit (10) as claimed in any of the preceding claims, wherein the luminous area of the light source (1) is less than 10 square micrometers, preferably less than 4 square micrometers.

5. The distance-measuring unit (10) as claimed in any of the preceding claims, wherein the intensity of the light emitted by the light source (1) is between three and five milliwatts.

6. The distance-measuring unit (10) as claimed in any of the preceding claims, wherein the modulation material is LiTaO3 and the spectrum of the emitted light has a bandwidth of at least 10 nanometers, preferably at least 15 nanometers.

7. The distance-measuring unit (10) as claimed in any of the preceding claims, wherein the modulation material is LiNbO3 and the spectrum of the emitted light has a bandwidth of at least 5 nanometers, preferably at least 8 nanometers.

8. The distance-measuring unit (10) as claimed in any of the preceding claims, wherein the light source (1) is a superluminescent diode.

9. The distance-measuring unit (10) as claimed in any of the preceding claims, wherein no optical isolator is arranged in the beam path in front of the light source (1).

10. The distance-measuring unit (10) as claimed in any of the preceding claims, wherein an optical bandpass filter (12) for stabilizing the frequency and the bandwidth is arranged in the beam path.

## Revendications

1. Dispositif de mesure de distance électro-optique (10) qui présente un séparateur de faisceau polarisant (3), un modulateur électro-optique (5), un retardateur lambda/4 (6) et une source de lumière (1) dont la lumière émise dans le dispositif de mesure de distance (10) est guidée au moins par le séparateur de faisceau polarisant (3), le modulateur électro-optique (5) et le retardateur lambda/4 (6) sur un trajet de mesure (8) et de la lumière de retour le long du trajet de mesure (8) est guidée au moins par le retardateur (6), le modulateur électro-optique (5) et le séparateur de faisceau polarisant (3) sur un détecteur (4), et qui présente de plus une unité d'évaluation (11) pour déterminer une longueur du trajet de mesure (8) en fonction d'une fréquence de modulation du modulateur électro-optique (5) et d'un signal du détecteur (4),

**caractérisé en ce qu'**une largeur de bande Δλ de la source de lumière (1) remplit la condition suivante

$$\left| \frac{d\{[n_o(\lambda) - n_e(\lambda)]l_{Kristall} / \lambda\}}{d\lambda} \Delta\lambda \right| \geq 1$$

cependant que $n_o$ est l'indice de réfraction ordinaire et $n_e$ l'indice de réfraction extraordinaire dépendant de la longueur d'onde du matériau modérateur, $l_{Kristall}$ la longueur du cristal du modulateur (5) et λ la longueur d'onde de la source de lumière (1).

2. Dispositif de mesure de distance (10) selon la revendication 1, l'unité d'évaluation (11) étant agencée pour la mesure de la longueur du trajet de mesure (8) selon le procédé Fizeau.

3. Dispositif de mesure de distance (10) selon la revendication 1 ou 2, le modulateur électro-optique (5) étant prévu pour la modulation de la polarisation de la lumière traversante.

4. Dispositif de mesure de distance (10) selon l'une des revendications précédentes, la surface lumineuse de la source de lumière (1) étant inférieure à 10 micromètres carrés, de préférence inférieure à 4 micromètres carrés.

5. Dispositif de mesure de distance (10) selon l'une des revendications précédentes, l'intensité de la lumière émise par la source de lumière (1) étant entre trois et cinq milliwatts.

6. Dispositif de mesure de distance (10) selon l'une des revendications précédentes, la matière de modulation étant du LiTa03 et le spectre de la lumière émise présentant une largeur de bande d'au moins 10 nanomètres, de préférence d'au moins 15 nanomètres.

7. Dispositif de mesure de distance (10) selon l'une des revendications précédentes, la matière de modulation étant du LiNb03 et le spectre de la lumière émise présentant une largeur de bande d'au moins 5 nanomètres, de préférence d'au moins 8 nanomètres.

8. Dispositif de mesure de distance (10) selon l'une des revendications précédentes, la source de lumière (1) étant une diode superluminescente.

9. Dispositif de mesure de distance (10) selon l'une des revendications précédentes, aucun isolateur optique n'étant placé dans la marche des rayons de la source de lumière (1).

10. Dispositif de mesure de distance (10) selon l'une des revendications précédentes, un filtre passe-bande optique (12) étant placé pour la stabilisation de la fréquence et de la largeur de bande dans la marche des rayons.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1647838 A
- WO 9718486 A

- EP 1744119 A